# EUROPÄISCHE PATENTSCHRIFT

(11) **EP 0 683 039 B1**
(45) Veröffentlichungstag und Bekanntmachung des Hinweises auf die Patenterteilung: **16.08.2000**
(21) Anmeldenummer: 95106704.0
(22) Anmeldetag: 04.05.1995
(51) Int. Cl.: B32B 31/12, B32B 33/00, H01H 13/70, B41J 2/21

(54) **Verfahren zur Herstellung von mit einem Mehrfarbendruck versehenen Frontfolien für Folientastaturen**
Method for making multicolour printed films for membrane touch switch panels
Méthode pour fabriquer des feuilles multicolores par impression pour des claviers flexibles

(30) Priorität: 13.05.1994 DE 4416867; 21.10.1994 DE 4437616
(43) Veröffentlichungstag der Anmeldung: 22.11.1995
(73) Patentinhaber: Celfa AG, 6423 Seewen (CH)
(72) Erfinder: Kundisch, Heiner, D-78056 Villingen-Schwenningen (DE)
(74) Vertreter: Monsch, René

(56) Entgegenhaltungen:
- EP-A- 0 400 801
- EP-A- 0 411 152
- EP-A- 0 512 540
- DE-A- 3 236 256
- PATENT ABSTRACTS OF JAPAN vol. 16 no. 237 (P-1362) ,29.Mai 1992 & JP-A-04 050968 (RICOH CO LTD) 19.Februar 1992,
- PATENT ABSTRACTS OF JAPAN vol. 12 no. 460 (P-795) ,5.Dezember 1988 & JP-A-63 183455 (FUJI PHOTO FILM CO LTD) 28.Juli 1988,
- PATENT ABSTRACTS OF JAPAN vol. 7 no. 250 (M-254) ,8.November 1983 & JP-A-58 136480 (MITSUBISHI SEISHI KK) 13.August 1983,
- DATABASE WPI Week 8838 Derwent Publications Ltd., London, GB; AN 88-268889 & JP-A-63 198 216 (YAMAKKUSU) , 16.August 1988
- DATABASE WPI Week 8844 Derwent Publications Ltd., London, GB; AN 88-312507 & JP-A-63 231 480 (KOBAYASHI H) , 27.September 1988

## Beschreibung

Die Erfindung betrifft ein Verfahren zur Herstellung von Frontfolien für Folientastaturen, die aus Deckfolien, insbesondere Polyesterfolien bestehen, welche oberseitig eine kratzfeste, harte, ggf. mattierte Schutzschicht aufweisen, die beispielsweise aus einem Zweikomponentenlack oder einem durch UV-Licht gehärteten Lack besteht, und welche unterseitig mit einem mehrfarbigen Druckbild versehen sind, wobei neben beliebigen Farben und Farbtönen auch Weiß als Farbe zur Verfügung stehen soll und die Frontfolie auch unbedruckte Klarsichtfenster haben kann.

Die als Frontfolien für Folientastaturen oder dgl. verwendeten Deckfolien aus Polyester oder Polycarbonat werden auf der Rückseite mehrfarbig bedruckt, damit sie von der Frontseite her beispielsweise Tastaturfelder, Schriftfelder od. dgl. erkennen lassen, wobei fensterartige Aussparungen nicht bedruckt werden, die als Durchsichtfenster beispielsweise auf Displays od. dgl. dienen. Das Bedrucken erfolgt herkömmlich im Siebdruckverfahren, was bedeutet, daß für jede benötigte Farbe ein separater Druckvorgang und auch ein spezielles Drucksieb erforderlich sind, durch welche das Bedrucken sehr hohe Kosten verursacht. Aus DE-A-32 36 256 ist das Bedrucken der Rückseite einer Polyesterfolie im Offsetdruckverfahren bei der Bildung einer Tastatur bekannt. Auch dieses Verfahren ist durch das Drucken vieler Schichten aufwendig.

Während beim Drucken weissen Papiers bzw. weisser Unterlagen eine weisse Druckfarbe nicht benötigt wird, muss diese beim Drucken von Deckfolien auch zur Verfügung stehen.

Es ist auch schon bekannt, sog. Overhead-Folien in Farbkopierern einseitig mehrfarbig zu bedrucken. Dabei werden die zu bedruckenden Polyesterfolien beidseitig mit der gleichen Farbtonerhaftschicht und ggf. mit einer Antistatikschicht versehen, obwohl nur eine Seite zu bedrucken ist. Der Grund für die beiderseitige Beschichtung mit der gleichen Farbtonerhaftschicht bzw. Antistatikschicht liegt darin, daß bei nur einseitiger Beschichtung unkontrollierbare elektrostatische Aufladungen die Qualität des Druckbildes stark beeinträchtigen und zu unbrauchbaren Druckergebnissen führen können.

Weiss als Druckfarbe wird aber auch hierbei nicht verwendet und benötigt, weil die Projektion von Bildern auf solchen Overhead-Folien in der Regel auf eine weisse Projektionsfläche erfolgt.

EP-A-0 411 152 beschreibt die Bildung einer Dekorationsfolie für Möbel oder Fussböden, welche eine optische Tiefenwirkung aufweisen soll. Auf die Probleme einer elektrostatischen Bedruckung einer Kunststoff-Folie wird in diesem Dokument nicht eingegangen.

Der Erfindung liegt die Aufgabe zugrunde, ein Verfahren zur Herstellung von Frontfolien der eingangs genannten Art anzugeben, durch welches bei zumindest annähernd gleicher Bildqualität die Kosten für das Erstellen der Druckbilder auf der Rückseite der Frontfolien gesenkt werden können.

Gelöst wird diese Aufgabe durch die kennzeichnenden Merkmale des Anspruchs 1.

Um mit grösserer Sicherheit höhere Druckqualitäten zu erhalten, ist es zweckmässig, die Antistatikeigenschaften gemäss Anspruch 1 vorzusehen, wobei gemäss Anspruch 2 die Möglichkeit besteht, die Antistatikschicht, wenn sie ihren Zweck erfüllt hat, wieder von der Schutzschicht zu entfernen.

Das Bedrucken von Frontfolien mittels computergesteuerten Laserdruckern oder mittels Farbkopierern, die pulverförmige Tonermasse verwenden, zum erfindungsgemäßen Zweck ist bisher vor allem deshalb unterblieben, weil diese computergesteuerte Farbdrucker und -Kopierer bzw. Druckverfahren keine weiße Farbe drucken können und weil die dabei zur Verfügung stehenden pulverförmigen Tonermassen mit ausreichender Druckbildqualität nur auf solche Folien gedruckt werden konnten, die beidseitig mit der gleichen Tonerhaftschicht bzw. mit einer zusätzlichen Antistatikschicht versehen sind. Folien mit einer kratzfesten Schutzsicht auf der Oberseite wurden bisher für ungeeignet gehalten, auf diese Weise bedruckt zu werden.

Durch das erfindungsgemäße Verfahren ist es nunmehr möglich, die mehrfarbigen Druckbilder, die für die Frontfolien z.B. von Folientastaturen benötigt werden, serienmäßig wesentlich kostengünstiger und schneller zu erzeugen, weil dadurch nicht nur die jeweils mehrfach benötigten Arbeitsgänge sondern auch die mehrfach benötigten Drucksiebe des bisher verwendeten Siebdruckverfahrens entfallen.

Das nachträgliche Aufbringen der weißen Farbe auf die bedruckte Unterseite der Deckfolie kann auf verschiedene Arten erfolgen. So könnte in vorteilhafter Weise gemäß Anspruch 3 unmittelbar hinter der obligatorischen Fixierstation des Druckers oder Kopierers für die weiße Farbe eine Auftragstation angeordnet sein, in der die weiße Farbe aufgewalzt wird.

Eine andere ebenfalls vorteilhafte Möglichkeit besteht nach Anspruch 4 in der Verwendung einer weißen Hinterlegfolie, die beispielsweise gemäß Anspruch 5 aufgeklebt werden kann.

Dabei kann die Hinterlegfolie in sich weiß sein oder eine weiße Farbschicht aufweisen.

Besonders gute Druckergebnisse lassen sich erfahrungsgemäß mit einem nach Anspruch 7 gekennzeichneten Drucker oder Kopierer erzielen.

Anhand der beiliegenden Zeichnung werden im folgenden der prinzipielle Aufbau einer Folientastatur mit einem Displayfenster und das erfindungsgemäße Verfahren näher erläutert. Es zeigt:
- Fig. 1: eine Folientastatur in Frontansicht;
- Fig. 2: die Folientastatur der Fig. 1 in Seitenansicht;
- Fig. 3: in vergrößerndem Maßstab einen Teilquerschnitt der Folientastatur gemäß Fig. 1; Fig. 4 eine bedruckte Deckfolie mit einer unterseitig
aufgeklebten weiß beschichteten Hinterlegfolie, wobei die rechte untere Ecke der Deckfolie abgezogen dargestellt ist und
- Fig. 5: eine teilweise von der Druckschicht abgezogene Ecke der Deckfolie mit ihrer unterseitigen Tonerhaftschicht.

Die in der Zeichnung dargestellte Folientastatur ist sandwichartig aufgebaut. Sie weist wenigstens eine Basisfolie 1, eine Distanzfolie 2, eine Schaltfolie 3 sowie eine Frontfolie 4 auf, die ihrerseits aus einer frontseitigen Deckfolie 5 und einer dieser unmittelbar hinterlegten Hinterlegfolie 6 besteht, die mit einer weißen Farbschicht 6' versehen ist oder die in sich weiß ist. Die Deckfolie 5 und die Hinterlegfolie 6 sind durch einen dünnen, ursprünglich auf der Hinterlegfolie angebrachten Klebefilm 7 vollflächig miteinander verklebt. Zum Schutz gegen Verkratzen oder andere schädliche Einwirkungen muß die Deckfolie 5 auf ihrer Oberseite mit einer gehärteten bzw. härteren Schutzschicht 5' versehen sein. Diese kann beispielsweise aus einem Zweikomponentenlack oder aus einem mit UV-Licht "eingebrannten" Lack bestehen. Gegebenenfalls kann diese Schutzschicht 5' auch matt sein. Auch die Basisfolie 1, die Distanzfolie 2, die Schaltfolie 3 und die Frontfolie 4 sind miteinander vollflächig verklebt.

Hinter der Basisfolie 1 befindet sich ein LCD-Display 8, das durch ein Sichtfenster 9 durch die Deckfolie 5 hindurch sichtbar ist. Das Sichtfenster 9 wird durch entsprechende passend übereinanderliegende Ausschnitte 10, 11, 12 bzw. 13 der Basisfolie 1, der Distanzfolie 2, der Schaltfolie 3 sowie der Hinterlegfolie 6 gebildet. Während die frontseitige Deckfolie 5 durchsichtig sein muß, können die Basisfolie 1, die Distanzfolie 2 und die Schaltfolie 3 auch undurchsichtig sein. In der Regel bestehen solche Folien vorzugsweise aus Polyester. Die Distanzfolie 2 ist zusätzlich mit fensterartigen Ausschnitten 14 versehen, in denen sich Cu-Kontaktelemente 15 und 15' der Basisfolie 1 bzw. der Schaltfolie 3 befinden, die jeweils durch Fingerdruck auf die Frontfolie 4 kontaktierend betätigt werden können. Jeweils über diesen fensterartigen Ausnehmungen 14 der Distanzfolie 2 sind tastenartige Druckbilder 16 und 17 vorgesehen, welche auf der Rückseite der Deckfolie 5 angeordnet sind und durch diese hindurch sichtbar sind. Dabei handelt es sich um Ziffern und Befehlstasten, die manuell jeweils durch Ausübung eines Fingerdrucks auf die betreffende Stelle zur Kontaktierung der Kontaktelemente 15, 15' betätigt werden können.

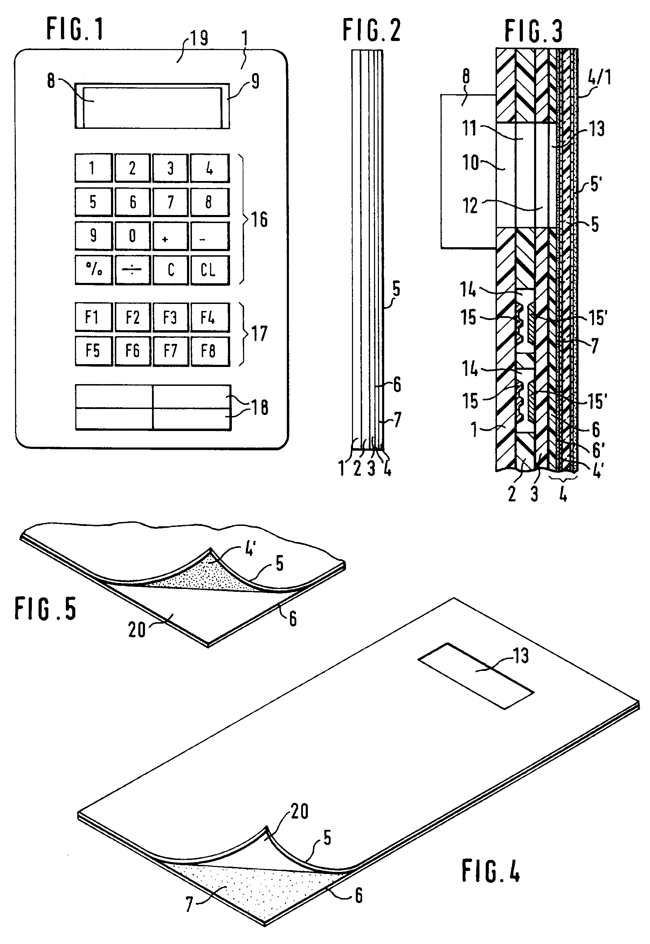

Während die in Fig. 1 sichtbare Frontfläche 19 der dargestellten Folientastatur in der Regel einfarbig ist, sind die Druckbilder 16 und 17, welche das Erscheinungsbild von Tasten wiedergeben, mindestens mit zwei Farben versehen, wobei die Flächen der einzelnen Kästchen jeweils farbig von der Farbe der Grundfläche 19 gut erkennbar abgesetzt sind und die Befehlstasten eine andere Farbe haben können als die Zifferntasten. Außerdem sind die Ziffern und die einzelnen Befehlssymbole ihrerseits wiederum farblich abgesetzt gegenüber den Flächenfarben der einzelnen Kästchen. Dabei können die Ziffern und/oder die Befehlssymbole oder Rechensymbole auch weiß erscheinen. Ähnliches gilt auch für die Textflächen 18, die unterhalb der Druckbilder 17 angeordnet sind.

Das Aufbringen sowohl der Farbe der Grundfläche 19 als auch der unterschiedlichen Farben der Druckbilder 16 und 17 und der Textflächen 18 erfolgt nach dem erfindungsgemäßen Verfahren derart, daß das mehrfarbige Bedrucken in einem computergesteuerten Laserdrucker oder -Kopierer erfolgt, wobei die Flächenabschnitte, die später weiß erscheinen sollen, frei bleiben und ebenso die Fensterausschnitte, durch welche das Display sichtbar sein soll. Dazu ist die frontseitige Deckfolie 5 auf ihrer zu bedruckenden Unterseite mit einer besonderen Farbtonerhaftschicht 4' versehen bzw. präpariert, auf welche der Farbdruck aufgebracht wird. Diese Farbtonerhaftschicht 4' ist entweder mit antistatischen Eigenschaften oder mit einer Antistatikschicht versehen, durch welche elektrostatische Aufladungen der Deckfolie, die die Druckbildqualität beeinträchtigen könnten, zumindest stark vermindert werden.

Um mit größtmöglicher Sicherheit das Auftreten unkontrollierter und für die Druckbildqualität schädlicher elektrostatischer Aufladungen zu vermeiden, ist auch die Schutzschicht 5' mit einer Antistatikschicht 4/1 versehen. Gewissermaßen in ausgleichendem Zusammenwirken mit den antistatischen Eigenschaften der Farbtonerhaftschicht 4' bzw. mit deren Antistatikschicht bewirkt diese zusätzliche Antistatikschicht 4/1 der Schutzschicht 5' die Vermeidung schädlicher elektrostatischer Ladungen beim Drucken, so daß scharfe und exakte Druckbilder entstehen.

Die weiße Farbe wird dann dadurch erzeugt, daß die bedruckte Unterseite der Deckfolie 5 mit der weißen Hinterlegfolie 6 hinterlegt wird, wobei es zweckmäßig ist, die Hinterlegfolie 6 zuvor mit einem Klebefilm zu versehen und diese mit Hilfe dieses Klebefilms auf die bedruckte Fläche der Deckfolie 5 aufzukleben.

In Fig. 4 sind die auf der Unterseite der Deckfolie 5 angebrachte Druckschicht 20 und der Klebefilm 7 auf der Oberseite der Hinterlegfolie 6 dargestellt.

In Fig. 5 ist die auf der zu bedruckenden Unterseite der Deckfolie 5 angebrachte Tonerhaftschicht 4' insofern unwirklich dargestellt, als sich die Druckschicht 20 von dieser Tonerhaftschicht 4' nicht mehr ablösen läßt.

Es besteht u.a. auch die Möglichkeit die weiße Farbe auf das mehrfarbige Druckbild dadurch aufzubringen, daß sie in einer der Fixierstation eines Druckers oder Kopierers nachgeschalteten Auftragsstation ggf. unter Verwendung einer Bildmaske aufgewalzt wird.

Besonders gute Druckergebnisse haben sich bei Farbdruckern bzw. Farbkopierern ergeben, bei denen zur Übertragung des abgetasteten Bildes von einer Fotoleitertrommel auf die Folie ein Bildzwischenträger, insbesondere in Form eines Übertragungsbandes, vorgesehen ist.

## Patentansprüche

1. Verfahren zur Herstellung von Frontfolien (4) für Folientastaturen, die aus Deckfolien (5), insbesondere Polyesterfolien bestehen, welche oberseitig eine kratzfeste, harte, ggf. mattierte Schutzschicht (5') aufweisen, die beispielsweise aus einem Zweikomponentenlack oder einem durch UV-Licht gehärteten Lack besteht, und welche unterseitig mit einem mehrfarbigen Druckbild versehen sind, wobei neben beliebigen Farben und Farbtönen auch Weiss als Farbe zur Verfügung stehen soll und die Frontfolie (4) auch unbedruckte Sichtfenster (13) haben kann, dadurch gekennzeichnet, dass die Deckfolie (5) nur auf der zu bedruckenden unterseitigen Fläche mit einer Farbtonerhaftschicht (4') versehen ist, welche antistatische Eigenschaften oder eine Antistatikschicht aufweist, und in einem computergesteuerten Drucker nach dem elektrostatischen Druckverfahren (Laserdruckverfahren) mit Farbtoner auf der Haftschichtseite bedruckt wird, wobei auch die Schutzschicht (5') mit einer Antistatikschicht (4/1) versehen ist, und dass die bedruckte Fläche anschliessend, ggf. unter Aussparung von Fensteröffnungen (13), mit weisser Farbe überzogen wird.

2. Verfahren nach Anspruch 1, dadurch gekennzeichnet, dass die Antistatikschicht (4/1) nach dem Bedrucken von der Schutzschicht (5') entfernt wird.

3. Verfahren nach einem der Ansprüche 1 oder 2, dadurch gekennzeichnet, dass die weisse Farbe in einer der Fixierstation eines Farbdruckers oder Farbkopierers nachgeschalteten Farbauftragstation auf die bedruckte Folienseite der Deckfolie (5) aufgewalzt wird.

4. Verfahren nach einem der Ansprüche 1 bis 3, dadurch gekennzeichnet, dass die weisse Farbe in Form einer weissen ggf. Fensteröffnungen (13) aufweisenden Hinterlegfolie (6) auf der bedruckten Seite der Deckfolie (5) hinterlegt wird.

5. Verfahren nach Anspruch 4, dadurch gekennzeichnet, dass die Hinterlegfolie (6) vollflächig mittels eines durchsichtig klaren Klebefilms (7) auf die bedruckte Seite der Deckfolie (6) aufgeklebt wird.

6. Verfahren nach einem der Ansprüche 1 bis 5, dadurch gekennzeichnet, dass das Bedrucken der Deckfolie (5) in einem Farbdrucker oder Farbkopierer erfolgt, der zur Übertragung des abgetasteten Bildes von einer Fotoleitertrommel auf die Folie einen Bildzwischenträger, insbesondere in Form eines Übertragungsbandes aufweist.

## Claims

1. Method for making front films (4) for membrane touch switch panels which consist of cover films (5), specifically polyester foils, which include at their upper side a scratch resistant, hard, possibly matted protective layer (5') which consists for instance of a two component lacquer or a UV-light hardened lacquer and which includes at the bottom side a multicolour printed picture, whereby apart from arbitrary colours and colour shades, white shall also be available as colour and the front film (4) may also have not-printed viewing windows (13), characterised in that the cover film (5) includes a colour toner adhering layer (4') only at the under side which is to be printed, which includes antistatic properties or a antistatic layer, and is printed in a computer controlled printer in accordance with the electrostatic printing method (laser printing method) with colour toner at the adhering layer side, whereby also the protective layer (5') is provided with an antistatic layer (4/1), and in that the printed area is thereafter, possibly at a leaving of window openings (13) covered by white colour.

2. Method according to claim 1, characterised in that the antistatic layer (4/1) is removed from the protective layer (5') after the printing.

3. Method according to one of the claims 1 or 2, characterised in that the white colour is rolled onto the printed film side of the cover film (5) in a colour depositing station subsequent to the fixing station of a colour printer or colour copy apparatus.

4. Method according to one of the claims 1 to 3, characterised in that the white colour is placed in form of a white backing film (6) having possibly window openings (13) onto the printed side of the cover film (5).

5. Method according to claim 4, characterised in that the backing film is bonded over the entire area by means of a transparent clear adhesive film (6) onto the printed side of the cover film (5).

6. Method according to one of the claims 1 to 5, characterised in that the printing of the cover film (5) proceeds in a colour printer or colour copy apparatus, which includes for the transfer of the scanned picture from a photo conductive drum onto the foil an intermediate picture carrier, specifically in form of a transfer tape.

## Revendications

1. Procédé pour la fabrication de feuilles frontales (4) pour clavier flexible, ces feuilles consistant en des feuilles de couverture (5), en particulier des feuilles en polyester, dont la surface supérieure comporte une couche protectrice (5') dure, résistant à l'abrasion , et le cas échéant mate, pouvant par exemple consister en un vernis à deux composants ou en un vernis durci par lumière ultra violette, et comportant à leur surface inférieure une impression polychrome, étant entendu que le blanc fait partie de l'ensemble de toutes les couleurs et de tous les tons possibles, la feuille frontale (4) pouvant comporter des fenêtres (13) vierges de toute impression, caractérisé en ce que la feuille de couverture (5) ne comporte que sur sa surface inférieure destinée à l'impression une couche adhésive (4') pour toner coloré, cette feuille présentant des propriétés ou un revêtement antistatique, et qu'elle est imprimée sur sa surface adhésive avec un toner selon un procédé d'impression électrostatique (impression par laser) sur une imprimante commandée par ordinateur, la couche protectrice (5') étant également pourvue d'un revêtement antistatique (4/1), et en ce que la surface imprimée est ensuite couverte de couleur blanche, en évitant le cas échéant de recouvrir les fenêtres.

2. Procédé selon la revendication 1, caractérisé en ce que l'on retire le revêtement antistatique (4/1) de la couche protectrice (5') après l'impression.

3. Procédé selon une de revendications 1 ou 2, caractérisé en ce que la couleur blanche est appliquée par laminage sur le côté imprimé de la feuille de couverture (5) à un poste d'application de couleur installé en aval de la station de fixation d'une imprimante ou d'une copieuse polychrome.

4. Procédé selon une des revendications 1 à 3, caractérisé en ce que la couleur blanche est appliquée sur le côté imprimé de la feuille de couverture (5) sous forme d'une feuille postérieure (6) présentant le cas échéant des ouvertures (13) formant fenêtres.

5. Procédé selon la revendication 4, caractérisé en ce que l'on colle au moyen d'un film collant transparent clair (7) la feuille postérieure (6) sur toute la surface du côté imprimé de la feuille de couverture (6).

6. Procédé selon l'une des revendications 1 à 5, caractérisé en ce que l'on effectue l'impression de la feuille de couverture (5) au moyen d'une imprimante polychrome ou d'une copieuse polychrome comportant un support d'image intermédiaire, en particulier sous forme d'une bande de transfert pour le transfert de l'image détectée d'un tambour photoconducteur à la feuille.
